# EUROPEAN PATENT SPECIFICATION

(11) **EP 2 597 386 B1**
(45) Date of publication and mention of the grant of the patent: **21.11.2018**
(21) Application number: 11190996.6
(22) Date of filing: 28.11.2011
(51) Int. Cl.: F24F 3/153, F24F 5/00

(54) **A cooling and heating device for places where industrial kitchens are installed**
Kühl- und Heizvorrichtung für Orte mit installierten Industrieküchen
Dispositif de refroidissement et de chauffage pour les lieux où sont installées des cuisines industrielles

(43) Date of publication of application: 29.05.2013
(73) Proprietor: Fioretti, Giuseppe, 62010 Montecosaro (Macerata) (IT)
(72) Inventor: Fioretti, Giuseppe, 62010 Montecosaro (Macerata) (IT)
(74) Representative: Negrini, Elena

(56) References cited:
- EP-A1- 1 988 348
- US-A- 4 204 409
- US-A- 4 658 600
- US-A- 5 181 552
- US-A- 5 823 006
- US-A1- 2010 071 888
- US-B1- 6 321 558

## Description

The present invention relates to the technical sector concerning devices for cooling and heating air in places where industrial kitchens are installed.
At present, for cooling and heating such places, climate-control systems are used having a single action of heating for during the winter, and cooling during the summer.
Single action systems have the drawback that they perform either the cooling function, for example conditioners containing fluid such as freon, or the heating function, for example radiators crossed by water, gas heaters etc.
To meet the need to cool and heat a place it is therefore necessary to use both systems: therefore consideration must be made of the costs for buying each system and all the problems connected to the installation, maintenance, safety and consumption of each of the systems.
Each industrial kitchen is provided with a cooking hob superposed by an aspirating hood, which following its functioning creates a depression that not only facilitates the absorption of fumes, steams, condensation, carbon monoxide (due to gas combustion), cooked and fermented food odours, but also causes a flow of air in proximity of the working zone of the operators.
This flow of air, in proximity of the work zones, creates a zone that is not very comfortable for the kitchen personnel; persons close to the cooking hob are either struck by flows of cold air (in summer) or hot air (in winter) with all the drawbacks this can bring for their health.

US2010/071888 is the closest prior art for the invention and discloses a device suitable for air cooling and air heating of a place, comprising a structure external of the place forming a channel set in communication with an air intake provided in a wall of the place, the structure containing and supporting first and second means for heating or cooling the airflow.

The aim of the invention is to provide a device that obviates the above drawbacks, and in particular a combined device that performs both cooling and heating of the air in places where industrial kitchens are installed.

A further aim of the invention is to provide a device realised in such a way as to considerably reduce energy consumption.

A further aim of the invention is to provide a device that does not obstruct air exchange internally of the above-mentioned places.

A further aim of the invention is to provide a device that enables obtaining a cooling action, while eliminating the cooling gases of known air conditioners.

A further aim of the invention is to provide a device that is obtained by a combination of parts of simple realisation and activated by the flow of air created by the aspiration of the aspirating hood of the kitchen.

A still further aim of the invention is to provide a device that satisfies the above requirements, and is obtained by a combination of parts of easy and economical maintenance.

These aims are attained with the contents of the accompanying claims.

The characteristics of the invention are set out in the following, with particular reference to the appended tables of the drawings, in which:
figure 1 is a schematic frontal view of the cooling and heating device of the air in a place, which is the object of the invention, in which an industrial kitchen is installed;
figure 2 is a view of section II-II of figure 1.

With reference to the accompanying tables of the drawings, 1 denotes a device for cooling and for heating the air in a place 2 in which an industrial kitchen 3 is installed, the cooking hob 31 of which has an aspirating hood 30 fitted above it.

The device 1 is defined by a structure S, external of the place 2 and communicating with outside, forming a channel 5 which is set in communication with an air intake 20 provided in a wall of the place 2, the structure S containing and supporting first means 4, for example a heat exchanger positioned at the inlet 50 of the channel 5, and second means 6, for example three evaporating panels arranged at three consecutive sides of a parallelepiped, the heat exchanger 4 being arranged in the fourth side of the parallelpiped.

The heat exchanger 4 and the evaporating panels 6 are orientated in such a way as to be struck by an air flow Φ which, entrained from the outside, following the aspirating action of the aspirating hood 30, crosses, in order, the evaporating panels 6, the heat exchanger 4 and the channel 5, finally to flow into the place 2.

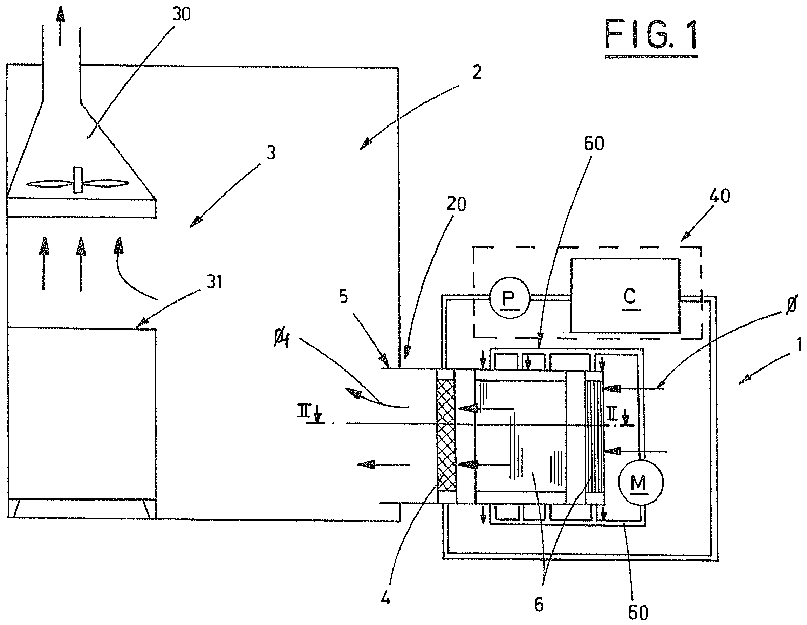

The heat exchanger 4 is connected either, as illustrated in figure 1, to a known supply system 40 defined by a boiler C and a pump P, or it is supplied by a heating plant which includes further places (not illustrated). Following activation of the supply system 40, the heat exchanger 4 is crossed by hot water.

The panels 6 are permeable to air and saturated with water and are moistened constantly, via a closed-circuit system defined by a channelling 60 connected in inlet to the heads of the panels 6 and in outlet to the base of the panels 6, the channellings being supplied with water by means of known methods M: the means M autonomously supply the panels 6 as soon as the level of the water thereon lowers due to evaporation thereof.

The functioning of the proposed device includes deactivation and activation respectively of the heat exchanger 4 and the panels 6, or vice versa, such as correspondingly to determine the functioning thereof as a cooling device or a heating device.

For cooling, it is necessary to proceed as follows: deactivating the supply system of the heat exchanger 40 and supplying the panels 6 with water.

Following the activation of the aspirating hood 30, the consequent depression causes entraining, from outside towards inside the place 2, of the air flow Φ that crosses the panels 6 that are constantly moistened by the water; in this condition the external air causes part of the water to evaporate, which causes reduction of the air temperature at the outlet of the panels 6.

The flow of cooled air Φ_{f} (fig. 1) crosses the deactivated heat exchanger 4 and flows into the place to be cooled.

For heating it is necessary to proceed as follows: activate the supply system 40 such that the hot water present in the circuit crosses the heat exchanger 40, and deactivate the closed-circuit system of the panels 6 such as not to moisten them.

Following activation of the aspirating hood 30, the depression causes entraining, from outside towards inside the place 2, of a flow of air Φ that crosses the panels 6 without undergoing substantial temperature variations, then to cross the heat exchanger 4: the air encounters a hot surface and absorbs heat therefrom, thus heating up.

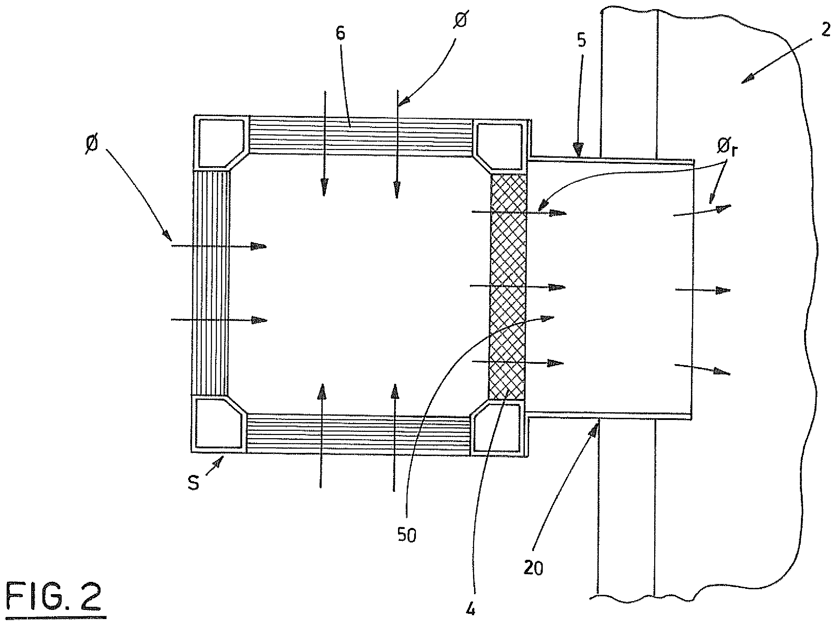

The heated air flow Φᵣ (fig. 2) flows into the environment to be heated.

The device of the present invention is particularly advantageous as it comprises a combination between the heat exchanger and the evaporating panels, which enables heating and cooling the air in a place with a single device.

The conformation of the device is such as to enable, with a simple activation of the aspirating hood 30, aspiration from outside of an air flow interesting the device 1 in order to be cooled or heated.

The use of an evaporative refrigeration, due to the crossing of the air flow Φ entrained from outside the filter panels that are saturated with water, enables cooling the outside air by some degrees and injecting it into the place (without impurities, as the impurities are captured by the structure of the panels), obtaining a beneficial "sea breeze" effect.

The device of the invention improves the environmental conditions in the places where industrial kitchens are installed, thus improving working conditions of the kitchen personnel; the personnel is no longer struck by particularly cold or hot air flows coming from traditional conditioning/heating systems, which is to their advantage in terms of health.
The fact that this device is associated to an external air intake in the place facilitates and accelerates installation thereof, as structural adaptation is no longer necessary in the room in order for heating or cooling it to be performed.
The proposed device is advantageous, as the functioning of the parts constituting it requires low energy consumption and easy and economical maintenance.
The device is positioned externally of the environments to be cooled and heated, with the channel 5 communicating with the inside of the place: this enables elimination of the constant controls for prevention of fire, as any leakage of gas for supplying the heating means are dispersed in the atmosphere.
The positioning of the system 1 externally of the place to be cooled and heated further enables recuperating the spaces in the place at present used for positioning the known cooling and heating systems.
The positive characteristics of the device for cooling and heating air in a place are clear from the above, as all the aims cited at the outset hereto can be attained, offering those characteristics of reliability required of climate control/heating devices.

## Claims

1. A system comprising an aspirating hood (30) and a device for air cooling and air heating of a place (2) in which an industrial kitchen (3) is installed, a cooking hob (31) of which is superposed by said aspirating hood (30), wherein the device comprises a structure (S) external of the place and communicating with an outside environment, forming a channel (5) set in communication with an air intake (20) provided in a wall of the place (2), the structure (S) containing and supporting first and second means, both orientated such as to be invested by the air flow (Φ) which, entered from outside, following an aspirating action of the aspirating hood, crosses, in order, the second and first means, said channel (5), then to finally flow into the place (2), the first means being destined, following activation thereof contemporaneously with a deactivation of the second means, to heat the air flow (Φ), and the second means being destined, following activation thereof contemporaneously with the deactivation of the first means, to cool the air flow (Φ).

2. The device of claim 1, **characterised in that** the first means are constituted by a heat exchanger (4) and **in that** the second means are constituted by at least an evaporating panel (6), permeable to air and soaked with water.

3. The device of claim 2, **characterised in that** at least three evaporating panels are provided, arranged on three consecutive sides of a parallelepiped and **in that** the heat exchanger (4) is arranged in a fourth side of the parallelepiped.

4. The device of claim 2, **characterised in that** the heat exchanger (4) is connected to a supply system (40) defined by a boiler (C) and a pump (P) which enables passage of hot water through the heat exchanger (40) in order to determine a heating of the air flow (Φ) entrained from outside and crossing the panel (6).

5. The device of claim 2, **characterised in that** the heat exchanger (4) is supplied by a heating plant which is connected with further places.

6. The device of claim 2, **characterised in that** the panel (6) is moistened via a closed-circuit system defined by a channelling (60) connected in inlet to a head of the panel (6) and in outlet to a base thereof, and is supplied with water by means (M), for determining a cooling of the air flow (Φ) entrained from outside.

7. The device of claim 6, **characterised in that** said means (M) autonomously supply the panel (6), with a lowering by evaporation of the water level on the panel (6).

## Patentansprüche

1. Ein System umfassend eine Ansaughaube (30) und eine Vorrichtung zur Luftkühlung und Lufterwärmung eines Standortes (2), an dem eine industrielle Küche (3) installiert ist, von der ein Kochfeld (31) von der Ansaughaube (30) überlagert ist, wobei die Vorrichtung eine Struktur (S) umfasst, die außerhalb des Standortes liegt und mit einer äußeren Umgebung in Verbindung steht und einen Kanal (5) bildet, der mit einem Lufteinlass (20) in Verbindung steht, der in einer Wand des Standortes (2) vorgesehen ist, wobei die Struktur (S) erste und zweite Mittel aufnimmt und trägt, die beide so ausgerichtet sind, dass sie von dem Luftstrom (Φ) umströmt werden, der von außen nach einer Ansaugwirkung der Ansaughaube eintritt, nacheinander die zweiten und ersten Mittel sowie den Kanal (5) quert, um dann schließlich in den Standort (2) zu strömen, wobei die ersten Mittel dazu bestimmt sind, nach ihrer Aktivierung gleichzeitig mit einer Deaktivierung der zweiten Mittel den Luftstrom (Φ) zu erwärmen, und die zweiten Mittel dazu bestimmt sind, nach ihrer Aktivierung gleichzeitig mit der Deaktivierung der ersten Mittel den Luftstrom (Φ) zu kühlen.

2. Die Vorrichtung gemäß Anspruch 1, **dadurch gekennzeichnet, dass** die ersten Mittel aus einem Wärmetauscher (4) bestehen und dass die zweiten Mittel aus mindestens einem luftdurchlässigen und mit Wasser getränkten Abdampfpaneel (6) bestehen.

3. Die Vorrichtung gemäß Anspruch 2, **dadurch gekennzeichnet, dass** zumindest drei Abdampfpaneele vorgesehen sind, die an drei aufeinanderfolgenden Seiten eines Parallelepipeds angeordnet sind und dass der Wärmetauscher (4) in einer vierten Seite des Parallelepipeds angeordnet ist.

4. Die Vorrichtung gemäß Anspruch 2, **dadurch gekennzeichnet, dass** der Wärmetauscher (4) mit einem Versorgungssystem (40) verbunden ist, das durch einen Kessel (C) und eine Pumpe (P) definiert ist, die den Durchgang von Warmwasser durch den Wärmetauscher (40) ermöglicht, um eine Erwärmung des Luftstroms (Φ) zu bestimmen, der von außen eingebracht wird und das Paneel (6) quert.

5. Die Vorrichtung gemäß Anspruch 2, **dadurch gekennzeichnet, dass** der Wärmetauscher (4) von einer Heizungsanlage versorgt wird, die mit weiteren Standorten verbunden ist.

6. Die Vorrichtung gemäß Anspruch 2, **dadurch gekennzeichnet, dass** das Paneel (6) über ein geschlossenes Kreislaufsystem befeuchtet wird, das durch eine Kanalisierung (60) definiert ist, die an einem Einlass mit einem Kopf des Paneels (6) und an einem Auslass mit einem Boden desselben verbunden ist, und mit Wasser durch Mittel (M) versorgt wird, um eine Kühlung des von außen eingebrachten Luftstroms (Φ) zu bestimmen.

7. Die Vorrichtung gemäß Anspruch 6, **dadurch gekennzeichnet, dass** die Mittel (M) das Paneel (6) selbstständig mit einer Absenkung des Wasserspiegels auf dem Paneel (6) durch Verdunstung versorgen.

## Revendications

1. Système comprenant une hotte aspirante (30) et un dispositif pour le refroidissement d'air et le chauffage d'air d'un lieu (2) dans lequel une cuisine industrielle (3) est installée, au-dessus d'une table de cuisson (31) de laquelle est superposée ladite hotte aspirante (30), le dispositif comprenant une structure (S) extérieure au lieu et en communication avec un environnement extérieur, formant un canal (5) placé en communication avec une admission d'air (20) prévue dans une paroi du lieu (2), la structure (S) contenant et supportant des premiers et seconds moyens, tous deux orientés de façon à être investis par l'écoulement d'air (Φ) qui, étant entré depuis l'extérieur, suite à une action d'aspiration de la hotte aspirante, traverse, dans l'ordre, les premiers et seconds moyens, ledit canal (5), pour au final s'écouler dans le lieu (2), les premiers moyens étant destinés, suite à leur activation simultanément à une désactivation des seconds moyens, à chauffer l'écoulement d'air (Φ) et les seconds moyens étant destinés, suite à leur activation simultanément à la désactivation des premiers moyens, à refroidir l'écoulement d'air (Φ).

2. Dispositif selon la revendication 1, **caractérisé par le fait que** les premiers moyens sont constitués d'un échangeur de chaleur (4) et **par le fait que** les seconds moyens sont constitués d'au moins un panneau d'évaporation (6), perméable à l'air et trempé dans de l'eau.

3. Dispositif selon la revendication 2, **caractérisé par le fait qu'**au moins trois panneaux d'évaporation sont prévus, disposés sur trois côtés consécutifs d'un parallélépipède, et **par le fait que** l'échangeur de chaleur (4) est disposé sur un quatrième côté du parallélépipède.

4. Dispositif selon la revendication 2, **caractérisé par le fait que** l'échangeur de chaleur (4) est relié à un système d'alimentation (40) défini par une chaudière (C) et une pompe (P) qui permet le passage d'eau chaude à travers l'échangeur de chaleur (40) afin de déterminer un chauffage de l'écoulement d'air (Φ) entraîné depuis l'extérieur et traversant le panneau (6).

5. Dispositif selon la revendication 2, **caractérisé par le fait que** l'échangeur de chaleur (4) est alimenté par une installation de chauffage qui est reliée à d'autres lieux.

6. Dispositif selon la revendication 2, **caractérisé par le fait que** le panneau (6) est humidifié par l'intermédiaire d'un système en circuit fermé défini par une canalisation (60) reliée en entrée à une tête du panneau (6) et en sortie à une base de celui-ci, et est alimenté en eau par des moyens (M) pour déterminer un refroidissement de l'écoulement d'air (Φ) entraîné depuis l'extérieur.

7. Dispositif selon la revendication 6, **caractérisé par le fait que** lesdits moyens (M) alimentent le panneau (6) de manière autonome, avec un abaissement par évaporation du niveau d'eau sur le panneau (6).
